# EUROPEAN PATENT SPECIFICATION

(11) **EP 1 640 352 B1**
(45) Date of publication and mention of the grant of the patent: **30.05.2007**
(21) Application number: 05255981.2
(22) Date of filing: 26.09.2005
(51) Int. Cl.: C04B 35/80, C04B 35/565, B32B 18/00

(54) **Low cost manufacturing process for high performance ceramic matrix composites**
Kostengünstiges Herstellungsverfahren für hochleistungs Keramikmatrix - Verbundwerkstoffe
Procèdé de faible cout de production des materiaux composites à matrice céramique à haute performance

(30) Priority: 28.09.2004 US 952193
(43) Date of publication of application: 29.03.2006
(73) Proprietor: GENERAL ELECTRIC COMPANY, Schenectady, NY 12345 (US)
(72) Inventor: Steibel, James Dale, Mason Ohio 45040 (US)
(74) Representative: Goode, Ian Roy

(56) References cited:
- EP-A- 1 059 274
- EP-A- 1 566 520
- US-A1- 2002 079 623
- US-B1- 6 365 233

## Description

The present invention relates generally to ceramic matrix composite materials, and specifically to silicon carbide fiber-reinforced ceramic matrix composite materials.

In order to increase the efficiency and the performance of gas turbine engines so as to provide increased thrust-to-weight ratios, lower emissions and improved specific fuel consumption, gas turbine engines are tasked to operate at higher temperatures. As the higher temperatures reach and surpass the limits of the material comprising the components in the hot section of the engine and in particular the turbine section of the engine, new materials must be developped.

As the engine operating temperatures have increased, new methods of cooling the high temperature alloys comprising the combustors and the turbine airfoils have been developed. For example, ceramic thermal barrier coatings (TBCs) were applied to the surfaces of components in the stream of the hot effluent gases of combustion to reduce the heat transfer rate and to provide thermal protection to the underlying metal and allow the component to withstand higher temperatures. These improvements helped to reduce the peak temperatures and thermal gradients. Cooling holes were also introduced to provide film cooling to improve thermal capability or protection. Simultaneously, ceramic matrix composites were developed as substitutes for the high temperature alloys. The ceramic matrix composites (CMCs) in many cases provided an improved temperature and density advantage over the metals, making them the material of choice when higher operating temperatures were desired. Included among the CMCs are silicon carbide fiber-reinforced ceramic matrix components.

One well-known method of manufacturing silicon carbide (SiC) fiber-reinforced ceramic matrix composites (CMCs) is commonly referred to as melt infiltration (MI) slurry casting. Exemplary processes for making such slurry cast MI CMC material described in U.S. Patent No. 6,280,550 B1, which is assigned to the assignee of the present invention.

The slurry cast MI process begins with the provision of a plurality of plies of SiC fabric, comprising woven tows of SiC fibers, laid up in an article form. The article form is then rigidized by applying a layer of boron nitride (BN) and a layer of SiC to the article form using a chemical vapor infiltration (CVI) batch process. The layer of BN is first deposited onto the surface of the article form by slowly flowing boron and nitrogen containing vapors over the SiC fibers in an CVI reactor atmosphere having a low but constant atmosphere of the vapor, thereby depositing the BN onto the SiC fibers. The BN is typically deposited at a temperature of about 1652°F (900°C) . For the BN deposition, preferred pressures are in the range of about 0.2 torr to about 2.0 torr. Once the first BN batch process is complete, the second CVI batch process is commenced. A layer of SiC is deposited onto the surface of the article form by slowly flowing the silicon and carbon-containing vapors over the SiC fibers in a CVI reactor atmosphere having a low but constant atmosphere of the vapor, thereby depositing the SiC onto the SiC fibers on top of the BN layer. The SiC is typically deposited at a temperature of about 1830°F (1000°C). For the SiC deposition, preferred pressures are in the range of about 0.2 torr to about 2.0 torr. The BN and SiC are both typically deposited by passing the BN and SiC carrier gases through a graphite tooled part with apertures or holes in the graphite tooling to control deposition and hence the thickness and uniformity of the resulting coating (both within a layer and between layers).

Once the article form is rigidized, the article form is then partially densified with a carbon-containing and/or SiC slurry. The article form is then infiltrated using silicon melt infiltration to complete the densification of the article form and to form the CMC.

While the slurry cast MI process is a functional process for creating relatively thin CMCs up to about 0.2 inch thick, attempting to uniformly deposit coating within the fiber preform on thicker parts using a batch CVI process has not been achieved. Lengthy CVI batch reactor processing of approximately 10 days is required to achieve uniform BN and SiC coating on the article form. Good BN and SiC coating is not readily achievable using typical batch CVI processes with thicker articles, even if longer periods of time are used. Higher CVI temperatures are not effective, as such higher temperatures result in less uniform coating. In addition, the CVI coatings commonly preferentially deposit around the perimeter of the bundle of fiber tows resulting in porosity within the bundle of tows which reduces thermal conductivity.

Another well-known method of manufacturing SiC fiber-reinforced CMCs is known as prepreg MI. The prepregged plies are composed of a plurality of unidirectional SiC fiber tows formed into a prepreg tape. A plurality of plies of the prepreg tape are cut and laminated to an article form. The article form is then infiltrated with silicon. Exemplary processes for making such prepreg CMC material are described in U.S. Patent Nos. 6,024,898 and 6,258,737, which are assigned to the assignee of the present invention. A problem with using prepreg tape in a SiC fiber-reinforced CMC is its unidirectional, as opposed to woven, fiber structure, which permits high tensile strength in only one direction in each ply. The prepreg process utilizes higher temperature deposition, resulting in denser coatings, and faster deposition cycle times than the slurry cast MI process. However, the prepreg process is only amenable to 1-D or 2-D fiber architecture.

What is needed is a process that will permit substantially full densification of thicker CMC components (with uniform thickness fiber coatings), as in the prior art prepreg MI process, while still permitting incorporation of advanced fiber architectures to enable the tailoring of strength properties (directionality) as in the prior art slurry cast MI process.

The present invention is a method for making a ceramic fiber-reinforced CMC article beginning with providing a plurality of ceramic fiber tows. A coating is deposited on the ceramic fiber tows using a continuous or semi-continuous CVD process. The coating comprises a layer of boron nitride (BN), the layer of boron nitride having a thickness sufficient to coat the fiber tows, providing increased debonding characteristics to the underlying fiber tows. The coating also comprises a layer of silicon-doped BN overlying the layer of BN, the layer of silicon-doped BN having a thickness sufficient to coat the layer of boron nitride, providing oxidization and volitization resistance to the underling layer of boron nitride. The coating also comprises a layer of silicon nitride (Si₃N₄) overlying the layer of silicon-doped BN, the layer of silicon nitride having a thickness sufficient to coat the underlying layer of silicon-doped boron nitride, providing oxidation and volitization resistance to the underlying layer of silicon-doped boron nitride and boron nitride. The coating also comprises a layer of carbon overlying the layer of silicon nitride, the layer of carbon having a thickness sufficient to coat the underlying layer of silicon nitride, increasing the ability of at least silicon to wet the coated fiber tows. Denser coatings resulting from use of a higher process temperature enable thinner coatings that allow subsequent handling in weaving machines. Commonly used fiber sizings, such as polyvinyl alcohol (PVA) and polyethylene oxide (PEO), which are typically solution-based polymers applied by pulling fiber tows through the solution, may also be applied to protect coated fiber during the weaving operation. The coated ceramic fiber tows are assembled into a plurality of plies of ceramic cloth. The plies of ceramic cloth are stacked into an article form. The article form is densified using a material selected from the group consisting of ceramic particulates, ceramic precursor resins, and combinations thereof and a method selected from the group consisting of slurry casting, resin transfer molding, vacuum impregnation, and combinations thereof.

The article form is then infiltrated with at least silicon forming a ceramic fiber-reinforced CMC with a substantially continuous matrix. The present invention is also a ceramic fiber-reinforced article manufactured with the method of the present invention.

The present invention is also another method for making a ceramic fiber-reinforced CMC article beginning with providing a plurality of ceramic fiber tows. A coating is deposited on the ceramic fiber tows using a continuous or semi-continuous CVD process. The coating comprises a layer of BN, the layer of boron nitride having a thickness sufficient to coat the fiber tows, providing increased debonding characteristics to the underlying fiber tows. The coating also comprises a layer of silicon-doped BN overlying the layer of BN, the layer of silicon-doped BN having a thickness sufficient to coat the layer of boron nitride, providing oxidation and volitization resistance to the underlying layer of boron nitride. The coating also comprises a layer of silicon nitride (Si₃N₄) overlying the layer of silicon-doped BN the layer silicon nitride having a thickness sufficient to coat the underlying layer of silicon-doped boron nitride, providing oxidation and volitization resistance to the underlying layer of silicon-doped boron nitride and boron nitride. The coating also comprises a layer of carbon overlying the layer of silicon nitride, the layer of carbon having a thickness sufficient to coat the underlying layer of silicon nitride, increasing the ability of at least silicon to wet the coated fiber tows. Denser coatings resulting from use of a higher process temperature enable thinner coatings that allow subsequent handling in weaving machines. Commonly used fiber sizings, such as polyvinyl alcohol (PVA) and polyethylene oxide (PEO), which are typically solution-based polymers applied by pulling fiber tows through the solution, may also be applied to protect coated fiber during the weaving operation. The coated ceramic fiber tows are assembled into a plurality of plies of ceramic cloth. The plies of ceramic cloth are stacked into an article form. The article form is densified using a material selected from the group consisting of ceramic particulates, ceramic precursor resins, and combinations thereof and a method selected from the group consisting of slurry casting, resin transfer molding, vacuum impregnation, and combinations thereof. The article form is then infiltrated with at least silicon forming a ceramic fiber-reinforced CMC with a substantially continuous matrix. The present invention is also a ceramic fiber-reinforced article manufactured with the method of the present invention, such as a gas turbine engine component.

An advantage of the present invention is that the need for expensive semi-durable graphite tooling is eliminated as the CVD reactor is run on the individual SiC fiber tows, rather than on article forms, which require the use of graphite tooling to permit coating of the article form.

Another advantage of the present invention is that the weaving of the already coated SiC fiber tows into plies, and laying up the coated plies, rather than coating the article form after it is assembled into a relatively thick structure, permits the assembly of thicker CMC structures than in the prior art slurry cast MI process.

Another advantage of the present invention is that the use of continuous or semi-continuous fiber coating operations on fibers tows facilitates the coating of the individual tows in the bundle, which reduces intra-tow porosity, increasing the strength and thermal conductivity of the final CMC structure relative to CMC structures with increased intra-tow porosity.

Another advantage of the present invention is lower cost processing resulting from using a fiber coating process having shorter fiber coating cycle times.

Another advantage of the present invention is the use of fiber coatings that are superior to slurry cast MI coatings to improve performance of the CMC structure such as high strength, improved durability, and improved thermal conductivity.

Yet another advantage of the present invention is that the coated fibers can be woven into thicker 3-D structures, permitting the assembly of articles with better strength than laid up 2-D structures.

Other features and advantages of the present invention will be apparent from the following more detailed description of the preferred embodiment, taken in conjunction with the accompanying lower cost and improved performance drawings which illustrate, by way of example, the principles of the invention, and in which:

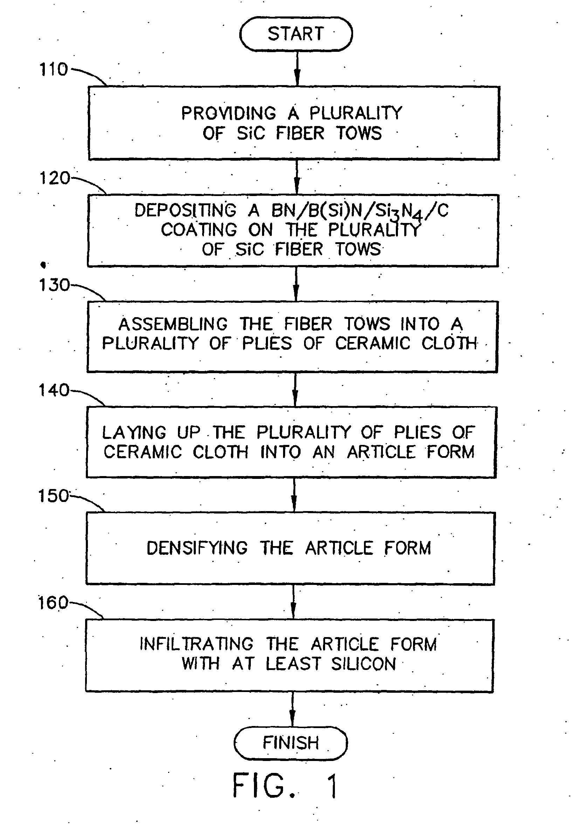

FIG. 1 is a flow chart illustrating a method of making a SiC fiber-reinforced CMC article of the present invention.

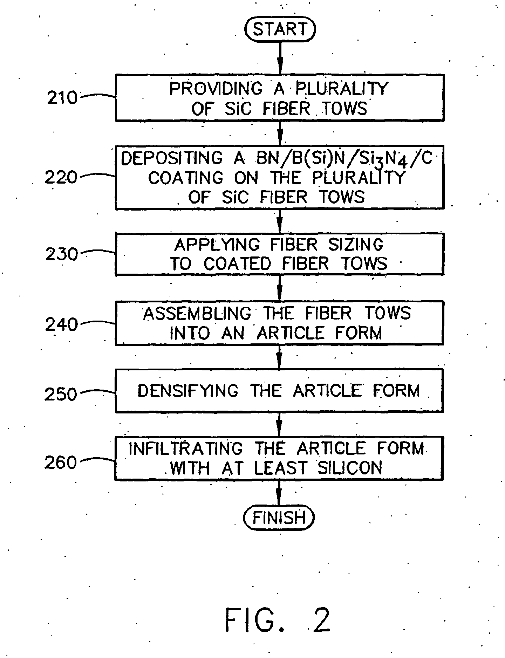

FIG. 2 is a flow chart illustrating an alternate method of making a SiC fiber-reinforced CMC article of the present invention.

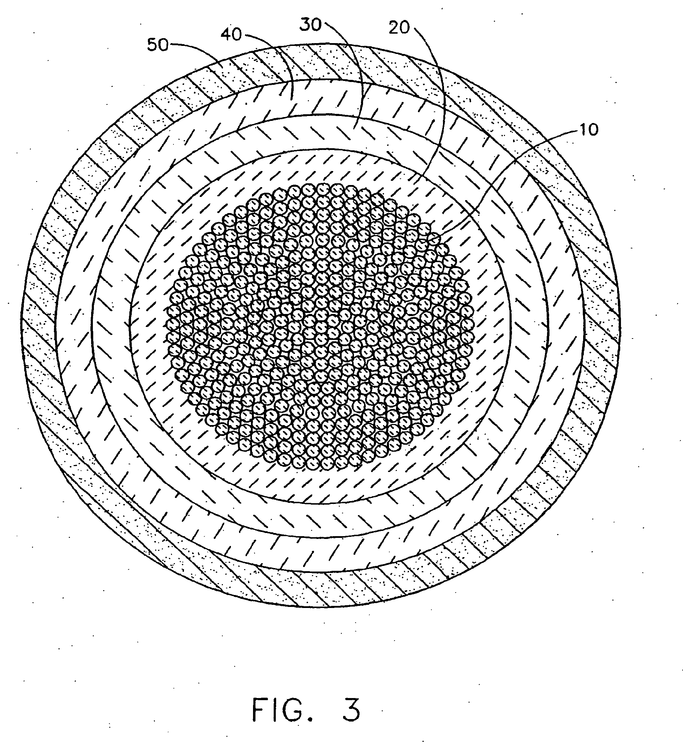

FIG. 3 is a cross-sectional view of a coated SiC fiber tow of the present invention.

The present invention is a method for manufacturing a SiC fiber-reinforced CMC article comprising a series of steps. The first step 110 of the present invention is providing a plurality of silicon carbide fiber tows 10. Such silicon carbide fiber tows 10 are known in the art. Reference to silicon carbide fiber tows includes materials where silicon carbide envelops a core or substrate, or where silicon carbide is a core or substrate, where such materials are woven into bundles of fibers, or tows 10. Other core materials, which may be enveloped by silicon carbide, include carbon and tungsten. The fibrous material that comprise the fiber tows 10 can be amorphous, crystalline, or a mixture thereof. The crystalline material may be single crystal or polycrystalline. Examples of silicon carbide-containing fibrous materials are silicon carbide, Si-C-O, Si-C-O-N, Si-C-B, and Si-C-O-Metal where the Metal component can vary, but frequently is titanium, zirconium, or boron. There are processes known in the art, which use organic precursors to produce silicon carbide-containing fibers, which may introduce a wide variety of elements into the fibers. Examples of these fibers include NICALON^{™}, HI-NICALON^{™}, and HI-NICALON S^{™}, registered trademarks of Nippon Carbon Company, Ltd., Yokohama, Japan; TYRANNO^{™} fibers, a registered trademark of Ube Industries, Ltd., Ube City, Yamaguchi, Japan; and SYLRAMIC^{™} fibers , a registered trademark of Dow Corning Corporation, Midland, Mich. "Fibrous material" includes fibers, filaments, strands, bundles, whiskers, cloth, felt, and a combination thereof. The fibers are typically continuous.

The next step 120 of the process is depositing a coating on the fiber tows 10 using chemical vapor deposition (CVD) in a continuous manner. The coating on the tows 10 comprises four layers 20, 30, 40, 50. Each layer 20, 30, 40, 50 leaves at least no significant portion of the fibrous material exposed, and preferably, the entirety of each fiber tow 10 is coated. The coating, in its entirety, should leave at least no significant portion of the fibrous material exposed, and preferable, the entirety of each fiber tow 10 is coated. Each layer 20, 30, 40, 50 of the coating should be free of any significant porosity and preferably is pore-free and uniform. The entire coating, comprising a plurality of coating layers 20, 30, 40, 50, should also be free of any significant porosity and preferably pore-free and uniform. The coating comprises a layer of BN 20, a layer of silicon-doped BN 30 overlying the layer of BN 20, a layer of Si₃N₄ 40 overlying the layer of silicon-doped BN 30, and a layer of carbon 50 overlying the later of Si₃N₄ 40. The layer of BN 20 is about 0.25 µm to about 0.75 µm thick. The layer of BN 20 is of a preselected thickness sufficient to coat the tow 10. While any thickness that is sufficient to coat the tow 10 to provide increased debonding characteristics to the underlying fiber tow may be used, the thickness is preferably about 0.4 µm to about 0.6 µm thick. silicon-doped BN coatings are described in detail in U.S. Patent No. 5,952,100, which is assigned to the assignee of the present invention, and which is incorporated herein by reference in its entirety. In the present invention, a range of silicon weight percent in the silicon-doped BN layer 30 is about 5 weigh percent silicon to about 40 weight percent silicon. In a preferred embodiment, the range of silicon weight percent in the silicon-doped BN layer 30 is about 5 weigh percent silicon to about 25 weight percent silicon. The layer of silicon-doped BN 30 is of a preselected thickness sufficient to coat the layer of BN 20. While any thickness that is sufficient to coat the layer of BN 20 to provide oxidation and volitization resistance to the underlying layer of BN 20 may be used, the thickness is preferably about 0.25 µm to about 0.75 µm thick. The layer of Si₃N₄ 40 is of a preselected thickness sufficient to coat the layer of silicon-doped BN 30. While any thickness that is sufficient to coat the layer of silicon-doped BN 30 to provide oxidation and volitization resistance to the underlying layers of silicon-doped BN 30 and BN 20 may be used, the thickness is preferably about 0.75 µm thick to about 1.25 µm thick. The layer of carbon 50 is sufficient to coat the layer of Si₃N₄ 40. While any thickness that is sufficient to coat the layer of Si₃N₄ 40 to increase the ability of at least silicon to wet the coated fiber tows may be used, the thickness is preferably about 0.05 µm to about 3 µm thick. The layer of carbon 50 is preferably deposited as pyrolitic carbon.

Each layer 20, 30, 40, 50 of the coating is present for a different purpose. The pure BN layer 20 gives good fiber-matrix debonding characteristics for a CMC, but the oxidation /volatilization resistance is poor. The silicon-doped BN layer 30, which can be thought of as a mixture of BN and Si₃N₄, provides better oxidation/volitization resistance than BN, while still retaining fair debonding characteristics and protecting underlying fiber and coating from molten silicon during the final densification process. The Si₃N₄ 40 layer provides even better oxidation/volitization resistance than the silicon-doped BN layer 30, but poor debonding characteristics. However, since the BN layer 20 is the base layer of the coating, the SiC fiber tows 10 are still able to adequately debond from the matrix under stress. The top carbon layer 50 is wettable with silicon, so that upon infiltration with at least silicon, the carbon layer will react to form SiC, which creates a good bond between the coated fiber tows and the matrix material. The coating of the present invention therefore has different layers 20, 30, 40, 50 that provide a different mix of desirable characteristics for the coating, so that overall the coating is silicon wettable, has good debonding characteristics, and has good oxidization/volitization resistance. Depositing fiber coatings onto tows 10, as opposed to depositing fiber coatings onto an entire article, as is the case with slurry cast MI, also allows higher fiber coating deposition temperatures, resulting in a more thermally stable coating due to increased crystallinity in the coating and increased coating density.

As used herein, "carbon" includes all forms of elemental carbon including graphite, particles, flakes, whiskers, or fibers of amorphous, single crystal, or polycrystalline carbon, carbonized plant fibers, lamp black, finely divided coal, charcoal, and carbonized polymer fibers or felt such as rayon, polyacrylonitrile, and polyacetylene.

Each layer 20, 30, 40, 50 of the coating is deposited using a progressively higher temperature continuous or semi-continuous process, rather than a lower temperature batch process. Each layer of the coating is preferably deposited at a temperature in the range of about 2550°F (1400°C) to about 2730°F (1500°C). For each layer 20, 30, 40, 50 of the coating, the fiber tow 10 is drawn through a CVD reactor and each layer 20, 30, 40, 50 of the coating is separately deposited continuously onto each SiC fiber tow 10 as it passes through the CVD reactor. The residence time for each coating layer 20, 30, 40, 50 is sufficient to provide a coating of the preselected thickness. For the preferred embodiments, this time is in the range of about 40 seconds to about 60 seconds, but will be longer or shorter when the preselected thickness is increased or decreased. In the preferred embodiment, about 125 m of tow 10 can be coated in about 2.5 hours. The coating process may be entirely continuous, such that immediately after deposition of one layer 10, 20, 30, another layer is deposited 20, 30 ,40 , such that the 10 tow passes from one section of a CVD reactor to a second section of the CVD reactor, or passed back through the same section in the case of a semi-continuous operation. The coating process may be stepwise continuous, such that the tows 10 are drawn off of a reel and through a CVD reactor for each layer 10, 20, 30 and then placed on another reel to be run back through the same or a different CVD reactor for the next coating layer 20, 30, 40. Since each individual tow 10 is coated with the four layer 10, 20, 30, 40 coating of the present invention by running the tows 10 through a CVD reactor, rather than being coated after the assembly of the cloth, as in the prior art slurry cast MI method, the coating on each tow 10 is more uniform and problems inherent in coating the entire article, such as created "canned" porosity within the tow (inter-tow porosity) and non-uniformity within and between plies, particularly as part thicknesses exceed 0.20, are avoided.

The next step 130 of the process is assembling the coated fiber tows into a plurality of plies of ceramic cloth. Such an assembly may be performed using any method known in the art, including, but not limited to weaving, braiding, and/or winding. Each ply of ceramic cloth should have size and shape of the layer of the article into which it will be assembled. Such shaping and sizing may be performed in any manner known in the art, such as weaving a large piece of ceramic cloth ply and then cutting the ply to the size and shape desired. The coated fiber tows are flexible enough to be woven into a cloth, rather than being limited to the unidirectional plies of the prepreg MI method.

The next step 140 of the present invention is laying up the plies of ceramic cloth into an article form. Since the tows are already coated prior to the stacking of the ceramic cloth into an article form, uniform CMC articles significantly thicker than about 0.2 inches may be manufactured with the method of the present invention. In a preferred embodiment, articles up to about 1 inch thick may be manufactured with the method of the present invention. Articles having a thickness greater than about 1 inch may be manufactured with the method of the present invention, but densification becomes more difficult as the article thickness increases beyond about 1 inch.

The next step 150 of the present invention is densifying the article form using a material selected from the group consisting of ceramic particulates, ceramic precursor resins, and combinations thereof. Both ceramic particulates and ceramic precursor resins are known in the art. Any functional method of matrix densification may be used, such as slurry casting, resin transfer molding, and/or vacuum impregnation, as necessary. Such methods of matrix densification are known in the art.

The final step 160 of the process of the present invention is infiltrating the article form with at least silicon to form a silicon carbide CMC article to complete the densification of the article. Substantially all of the carbon for the silicon carbide is provided from the ceramic particulates and/or ceramic precursor resins of step 150. The article form is preferably infiltrated with boron-doped silicon. The article form is more preferably infiltrated with 5 percent boron-doped silicon by weight.

The present invention is also a method for manufacturing a SiC fiber-reinforced CMC article having 3-D architecture comprising a series of steps. The first step 210 of the present invention is providing a plurality of silicon carbide fiber tows. Such silicon carbide fiber tows are known in the art and are described previously in this application.

The next step 220 of the process is depositing a coating on the fiber tows 10 using chemical vapor deposition (CVD) in a continuous manner. The coating on the tows 10 comprises four layers 20, 30, 40, 50. Each layer 20, 30, 40, 50 leaves at least no significant portion of the fibrous material exposed, and preferably, the entirety of each fiber tow 10 is coated. The coating, in its entirety, should leave at least no significant portion of the fibrous material exposed, and preferable, the entirety of each fiber tow 10 is coated. Each layer 20, 30, 40, 50 of the coating should be free of any significant porosity and preferably is pore-free and uniform. The entire coating, comprising a plurality of coating layers 20, 30, 40, 50, should also be free of any significant porosity and preferably pore-free and uniform. The coating comprises a layer of BN 20, a layer of silicon-doped BN 30 overlying the layer of BN 20, a layer of Si₃N₄ 40 overlying the layer of silicon-doped BN 30, and a layer of carbon 50 overlying the later of Si₃N₄ 40. The layer of BN 20 is about 0.25 µm to about 0.75 µm thick. The layer of BN 20 is of a preselected thickness sufficient to coat the tow 10. While any thickness that is sufficient to coat the tow 10 to provide increased debonding characteristics to the underlying fiber tow may be used, the thickness is preferably about 0.4 µm to about 0.6 µm thick. Silicon-doped BN coatings are described in detail in U.S. Patent No. 5,952,100, which is assigned to the assignee of the present invention, and which is incorporated herein by reference in its entirety. In the present invention, a range of silicon weight percent in the silicon-doped BN layer 30 is about 5 weight percent silicon to about 40 weight percent silicon. In a preferred embodiment, the range of silicon weight percent in the silicon-doped BN layer 30 is about 5 weight percent silicon to about 25 weight percent silicon. The layer of silicon-doped BN 30 is of a preselected thickness sufficient to coat the layer of BN 20. While any thickness that is sufficient to coat the layer of BN 20 to provide oxidation and volitization resistance to the underlying layer of BN 20 may be used, the thickness is preferably about 0.25 µm to about 0.75 µm thick. The layer of Si₃N₄ 40 is of a preselected thickness sufficient to coat the layer of silicon-doped BN 30. While any thickness that is sufficient to coat the layer of silicon-doped BN 30 to provide oxidation and volitization resistance to the underlying layers of silicon-doped BN 30 and BN 20 may be used, the thickness is preferably about 0.75 µm thick to about 1.25 µm thick. The layer of carbon 50 is sufficient to coat the layer of Si₃N₄ 40. While any thickness that is sufficient to coat the layer of Si₃N₄ 40 to increase the ability of at least silicon to wet the coated fiber tows may be used, the thickness is preferably about 0.05 µm to about 3 µm thick. The layer of carbon 50 is preferably deposited as pyrolitic carbon.

Each layer 20, 30, 40, 50 of the coating is present for a different purpose. The pure BN layer 20 gives good fiber-matrix debonding characteristics for a CMC, but the oxidation/volatilization resistance is poor. The silicon-doped BN layer 30, which can be thought of as a mixture of BN and Si₃N₄, provides better oxidation/volitization resistance than BN, while still retaining fair debonding characteristics and protecting underlying fiber and coating from molten silicon during the final densification process. The Si₃N₄ 40 layer provides even better oxidation/volitization resistance than the silicon-doped BN layer 30, but poor debonding characteristics. However, since the BN layer 20 is the base layer of the coating, the SiC fiber tows 10 are still able to adequately debond from the matrix under stress. Each layer of the coating is deposited at a temperature in the range of about 1400°C (2550°F) to about 1500°C (2730°F). For each layer of the coating, the fiber tow is drawn through a CVD reactor and each layer of the coating is separately deposited continuously onto each SiC fiber tow as it passes through the CVD reactor. The residence time for each coating layer is in the range of about 40 seconds to about 60 seconds. In a preferred embodiment, about 125 m of tow can be coated in about 2.5 hours. The coating process may be entirely continuous, such that immediately after deposition of one layer, another layer is deposited, such that the tow passes from one section of a CVD reactor to a second section of the CVD reactor, or passed back through the same section in the case of a semi-continuous operation. The coating process may be stepwise continuous, such that the tows are drawn off of a reel and through a CVD reactor for each layer and then placed on another reel to be run back through the same or a different CVD reactor for the next coating layer. Since each individual tow is coated with the four layer coating of the present invention by running the tows, rather than being coated after the assembly of the cloth, as in the prior art slurry cast MI method, the coating on each tow is more uniform and problems inherent in coating the entire article, such as created "canned" porosity within the tow (intrantous porosity) and non-uniformity within and between plies, particularly as part thicknesses exceed 0.20, are avoided.

The next step of the present invention is applying fiber sizing to the surface of the coated fiber tows. Fiber sizings are well known in the art. The fiber sizings used for the present invention are preferably solution-based polymers that are applied to the surface of the coated tows by pulling the fiber tows through a fiber sizing solution. In a preferred embodiment, the fiber sizings are selected from the group consisting of PVA solutions, PEO solutions, and combinations thereof. Such fiber sizings are necessary to protect the coated fiber tows during the subsequent step 240 of assembly, since 3-D article forms are always created using machine operation. Without the presence of fiber sizings, the coating layers 20, 30, 40, 50 may be damaged during the step 240 of assembly.

The next step 240 of the process is assembling the coated fiber tows into an article form plurality of plies of ceramic cloth. Such an assembly may be performed using any method known in the art, including, but not limited to weaving, braiding, and/or winding. 3-D process typically produce a near-net single structure using processes such as weaving the coated fiber tows into a shaped mandrel while forming 3-D fiber structures. Uniform CMC articles significantly thicker than about 0.2 inches may be manufactured with the method of the present invention. In a preferred embodiment, articles up to about 1 inch thick may be manufactured with the method of the present invention. Articles having a thickness greater than about 1 inch may be manufactured with the method of the present invention.

The next step 250 of the present invention is densifying the article form using a material selected from the group consisting of ceramic particulates, ceramic precursor resins, and combinations thereof. Both ceramic particulates and ceramic precursor resins are known in the art. Any functional method of matrix densification may be used, such as slurry casting, resin transfer molding, and/or vacuum impregnation, as necessary. Such methods of matrix densification are known in the art.

The final step 260 of the process of the present invention is infiltrating the article form with at least silicon to form a silicon carbide CMC article to complete the densification of the article. Substantially all of the carbon for the silicon carbide is provided from the ceramic particulates and/or ceramic precursor resins of step 150. The article form is preferably infiltrated with boron-doped silicon. The article form is more preferably infiltrated with 5 percent boron-doped silicon by weight.

## Claims

1. A method for manufacturing a ceramic fiber-reinforced ceramic matrix composite article comprising the steps of:
providing a plurality of ceramic fiber tows [10];
depositing a coating on the fiber tows [10] using chemical vapor deposition in a manner selected from the group consisting of a continuous chemical vapor deposition process and a semi-continuous chemical vapor deposition process, the coating comprising:
a layer of boron nitride [20], the layer of boron nitride having a thickness sufficient to coat the fiber tows, providing increased debonding characteristics to the underlying fiber tows;
a layer of silicon-doped boron nitride [30] overlying the layer of boron nitride, the layer of silicon-doped boron nitride having a thickness sufficient to coat the layer of boron nitride, providing oxidization and volitization resistance to the underling layer of boron nitride;
a layer of silicon nitride [40]overlying the layer of silicon-doped boron nitride, the layer of silicon nitride having a thickness sufficient to coat the underlying layer of silicon-doped boron nitride, providing oxidation and volitization resistance to the underlying layer of silicon-doped boron nitride and boron nitride; and
a layer of carbon [50] overlying the layer of silicon nitride the layer of carbon having a thickness sufficient to coat the underlying layer of silicon nitride, increasing the ability of at least silicon to wet the coated fiber tows;
assembling the coated fiber tows into a plurality of plies of ceramic cloth;
laying up the plies of ceramic cloth into an article form;
densifying the article form using a material selected from the group consisting of ceramic particulates, ceramic precursor resins, and combinations thereof and using a method selected from the group consisting of slurry casting, resin transfer molding, vacuum impregnation, and combinations thereof; and
infiltrating the article form with at least silicon to form a ceramic matrix composite article with a substantially continuous matrix.

2. The method of claim 1, wherein the ceramic is silicon carbide.

3. The method of claim 1, wherein the step of depositing using chemical vapor deposition further includes the continuous chemical vapor deposition process.

4. The method of claim 1, wherein the step of depositing using chemical vapor deposition further includes the semi-continuous chemical vapor deposition process.

5. The method of claim 1, wherein the boron nitride layer [20] has a thickness in the range of about 0.25 µm to about 0.75 µm, the silicon doped boron nitride layer [30] has a thickness in the range of about 0.25 µm to about 0.75 µm, the silicon nitride layer [40] has a thickness in the range of about 0.75 µm to about 1.25 µm, and the carbon layer [50] has a thickness in the range of about 0.05 µm to about 3 µm, and wherein each layer of the coating is deposited at a temperature in the range of about 1400°C to about 1500°C.

6. The method of claim 5, wherein the step of depositing using chemical vapor deposition further includes the continuous chemical vapor deposition process.

7. The method of claim 5, wherein the step of depositing using chemical vapor deposition further includes the non-continuous chemical vapor deposition process.

8. The method of claim 4, wherein weight percent of silicon in the silicon doped boron nitride layer [30] is in the range of about 5 weight percent silicon to about 40 weight percent silicon.

9. The method of claim 2, wherein the boron nitride layer [20] has a thickness in the range of about 0.25 µm to about 0.75 µm, the silicon doped boron nitride layer [30] has a thickness in the range of about 0.25 µm to about 0.75 µm, the silicon nitride [40] layer has a thickness in the range of about 0.75 µm to about 1.25 µm, and the carbon layer [50] has a thickness in the range of about 0.05 µm to about 3 µm, and wherein each layer of the coating is deposited at a temperature in the range of about 1400°C to about 1500°C.

10. A ceramic matrix composite turbine engine article manufactured with the process of claim 8.

## Patentansprüche

1. Verfahren zum Herstellen eines Keramikfaser-verstärkten Keramikmatrix-Verbundgegenstandes, umfassend die Stufen:
Bereitstellen einer Mehrzahl von Keramikfaserkabeln (10),
Abscheiden eines Überzuges auf den Faserkabeln (10) unter Benutzung der chemischen Dampfabscheidung in einer Weise, die ausgewählt ist aus der Gruppe bestehend aus einem kontinuierlichen chemischen Dampfabscheidungsverfahren und einem halbkontinuierlichen chemischen Dampfabscheidungsverfahren, wobei der Überzug umfasst:
eine Schicht aus Bornitrid (20), wobei die Schicht aus Bornitrid eine genügende Dicke aufweist, um die Faserkabel zu überziehen, was den darunterliegenden Faserkabeln verstärkte bindungslösende Charakteristika verleiht,
eine Schicht (30) aus siliciumdotiertem Bornitrid, die über der Schicht aus Bornitrid liegt, wobei die Schicht aus siliciumdotiertem Bornitrid eine genügende Dicke aufweist, um die Schicht aus Bornitrid zu überziehen, was der darunterliegenden Schicht aus Bornitrid Oxidations- und Verdampfungsbeständigkeit verleiht,
eine Schicht (40) aus Siliciumnitrid, die über der Schicht aus siliciumdotiertem Bornitrid liegt, wobei die Schicht aus Siliciumnitrid eine genügende Dicke aufweist, um die darunter liegende Schicht aus siliciumdotiertem Bornitrid zu überziehen, was der darunter liegenden Schicht aus siliciumdotiertem Bornitrid und Bornitrid Oxidations- und Verdampfungsbeständigkeit verleiht und
eine Schicht aus Kohlenstoff (50), die über der Schicht aus Siliciumnitrid liegt, wobei die Schicht aus Kohlenstoff eine genügende Dicke aufweist, um die darunter liegende Schicht aus Siliciumnitrid zu überziehen, was die Fähigkeit zumindest von Silicium erhöht, die überzogenen Faserkabel zu benetzen,
Zusammensetzen der überzogenen Faserkabel zu einer Mehrzahl von Schichten aus Keramikgewebe,
Aufeinanderlegen der Schichten aus Keramikgewebe zu einer Gegenstandsform,
Verdichten der Gegenstandsform unter Einsatz eines Materials, ausgewählt aus der Gruppe bestehend aus Keramikteilchen, Keramikvorläuferharzen und deren Kombimationen und Benutzen eines Verfahrens ausgewählt aus der Gruppe bestehend aus Aufschlämmungsgiessen, Harzspritzpressen, Vakuumimpräg-nieren und Kombinationen davon und
Infiltrieren der Gegenstandsform mit zumindest Silicium, um einen Keramikmatrix-Verbundgegenstand mit einer im wesentlichen kontinuierlichen Matrix zu bilden.

2. Verfahren nach Anspruch 1, worin die Keramik Siliciumkarbid ist.

3. Verfahren nach Anspruch 1, worin die Stufe des Abscheidens unter Benutzung der chemischen Dampfabscheidung weiter das kon-tinuierliche chemische Dampfabscheidungsverfahren einschliesst.

4. Verfahren nach Anspruch 1, worin die Stufe des Abscheidens unter Benutzung der chemischen Dampfabscheidung weiter das halbkontinuierliche chemische Dampfabscheidungsverfahren einschliesst.

5. Verfahren nach Anspruch 1, worin die Bornitridschicht (20) eine Dicke im Bereich von etwa 0,25 µm bis etwa 0,75 µm hat, die siliciumdotierte Bornitridschicht (30) eine Dicke im Bereich von etwa 0,25 µm bis etwa 0,75 µm hat, die Siliciumnitridschicht (40) eine Dicke im Bereich von etwa 0,75 µm bis etwa 1,25 µm hat und die Kohlenstoffschicht (50) eine Dicke im Bereich von etwa 0,05 µm bis etwa 3 µm hat und worin jede Schicht des Überzuges bei einer Temperatur von etwa 1400°C bis etwa 1500°C abgeschieden wird.

6. Verfahren nach Anspruch 5, worin die Stufe des Abscheidens unter Benutzung der chemischen Dampfabscheidung weiter das kon- tinuierliche chemische Dampfabscheidungsverfahren einschliesst.

7. Verfahren nach Anspruch 5, worin die Stufe des Abscheidens unter Benutzung der chemischen Dampfabscheidung weiter das halbkontinuierliche chemische Dampfabscheidungsverfahren einschliesst.

8. Verfahren nach Anspruch 4, worin die Gewichtsprozent von Silicium in der siliciumdotierten Bornitridschicht (30) im Bereich von etwa 5 Gew.-% bis etwa 40 Gew.-% betragen.

9. Verfahren nach Anspruch 2, worin die Bornitridschicht (20) eine Dicke im Bereich von etwa 0,25 µm bis etwa 0,75 µm hat, die siliciumdotierte Bornitridschicht (30) eine Dicke im Bereich von etwa 0,25 µm bis etwa 0,75 µm hat, die Siliciumnitridschicht (40) eine Dicke im Bereich von etwa 0,75 µm bis etwa 1,25 µm hat und die Kohlenstoffschicht (50) eine Dicke im Bereich von etwa 0,05 µm bis etwa 3 µm hat und worin jede Schicht des Überzuges bei einer Temperatur von etwa 1400°C bis etwa 1500°C abgeschieden wird.

10. Keramikmatrix-Verbundgegenstand eines Turbinentriebwerkes, hergestellt mit dem Verfahren nach Anspruch 8.

## Revendications

1. Procédé de fabrication d'un article composite à matrice de céramique et renfort de fibres de céramique, comportant les étapes suivantes :
- prendre de multiples câbles (10) de fibres de céramique ;
- déposer un revêtement sur ces câbles (10) de fibres, par dépôt chimique à partir d'une phase vapeur, en un mode choisi parmi les modes continu et semi-continu de procédé de dépôt chimique à partir d'une phase vapeur, lequel revêtement comprend :
- une couche (20) de nitrure de bore, laquelle couche de nitrure de bore présente une épaisseur suffisante pour revêtir les câbles de fibres et confère aux câbles de fibres sous-jacents des caractéristiques améliorées de décollement,
- une couche (30) de nitrure de bore dopé au silicium recouvrant la couche de nitrure de bore, laquelle couche de nitrure de bore dopé au silicium présente une épaisseur suffisante pour revêtir la couche de nitrure de bore et confère à cette couche sous-jacente de nitrure de bore une résistance à l'oxydation et à la volatilisation,
- une couche (40) de nitrure de silicium recouvrant la couche de nitrure de bore dopé au silicium, laquelle couche de nitrure de silicium présente une épaisseur suffisante pour revêtir la couche sous-jacente de nitrure de bore dopé au silicium et confère aux couches sous-jacentes de nitrure de bore dopé au silicium et de nitrure de bore une résistance à l'oxydation et à la volatilisation,
- et une couche (50) de carbone recouvrant la couche de nitrure de silicium, laquelle couche de carbone présente une épaisseur suffisante pour revêtir la couche sous-jacente de nitrure de silicium et permet, au moins à du silicium, de mouiller davantage les câbles de fibres revêtus ;
- assembler les câbles de fibres revêtus pour en faire plusieurs couches de tissu de céramique ;
- empiler ces couches de tissu de céramique pour en faire une ébauche d'article ;
- densifier cette ébauche d'article au moyen d'un matériau choisi dans l'ensemble formé par des particules de céramique, des résines précurseurs de céramique et les combinaisons de tels matériaux, et en ayant recours à un procédé choisi dans l'ensemble formé par la coulée de suspension, l'injection basse pression, l'imprégnation sous vide et les combinaisons de ces procédés ;
- et faire pénétrer par infiltration au moins du silicium dans l'ébauche d'article, pour faire de celle-ci un article composite à matrice de céramique où cette matrice est sensiblement continue.

2. Procédé conforme à la revendication 1, dans lequel la céramique est du carbure de silicium.

3. Procédé conforme à la revendication 1, dans lequel l'étape de dépôt chimique à partir d'une phase vapeur comporte en outre une opération effectuée selon un procédé continu de dépôt chimique à partir d'une phase vapeur.

4. Procédé conforme à la revendication 1, dans lequel l'étape de dépôt chimique à partir d'une phase vapeur comporte en outre une opération effectuée selon un procédé semi-continu de dépôt chimique à partir d'une phase vapeur.

5. Procédé conforme à la revendication 1, dans lequel la couche (20) de nitrure de bore est épaisse d'à peu près 0,25 à 0,75 µm, la couche (30) de nitrure de bore dopé au silicium est épaisse d'à peu près 0,25 à 0,75 µm, la couche (40) de nitrure de silicium est épaisse d'à peu près 0,75 à 1,25 µm, et la couche (50) de carbone est épaisse d'à peu près 0,05 à 3 µm, et chaque couche du revêtement est déposée à une température située dans l'intervalle allant à peu près de 1400 à 1500 °C.

6. Procédé conforme à la revendication 5, dans lequel l'étape de dépôt chimique à partir d'une phase vapeur comporte en outre une opération effectuée selon un procédé continu de dépôt chimique à partir d'une phase vapeur.

7. Procédé conforme à la revendication. 5, dans lequel l'étape de dépôt chimique à partir d'une phase vapeur comporte en outre une opération effectuée selon un procédé non-continu de dépôt chimique à partir d'une phase vapeur.

8. Procédé conforme à la revendication 4, dans lequel il y a, dans la couche (30) de nitrure de bore dopé au silicium, à peu près de 5 à 40 % en poids de silicium.

9. Procédé conforme à la revendication 2, dans lequel la couche (20) de nitrure de bore est épaisse d'à peu près 0,25 à 0,75 µm, la couche (30) de nitrure de bore dopé au silicium est épaisse d'à peu près 0,25 à 0,75 µm, la couche (40) de nitrure de silicium est épaisse d'à peu près 0,75 à 1,25 µm, et la couche (50) de carbone est épaisse d'à peu près 0,05 à 3 µm, et chaque couche du revêtement est déposée à une température située dans l'intervalle allant à peu près de 1400 à 1500 °C.

10. Pièce de moteur à turbine en matériau composite à matrice de céramique, fabriquée selon un procédé conforme à la revendication 8.
